(19) Europäisches Patentamt
European Patent Office
Office européen des brevets

(11) Publication number: 0 120 711
A2

# (12) EUROPEAN PATENT APPLICATION

(21) Application number: 84302113.0

(22) Date of filing: 28.03.84

(51) Int. Cl.$^3$: C 08 L 59/02
C 08 L 75/06, C 08 J 5/02

(30) Priority: 29.03.83 US 479943

(43) Date of publication of application:
03.10.84 Bulletin 84/40

(84) Designated Contracting States:
BE DE FR GB IT NL

(71) Applicant: E.I. DU PONT DE NEMOURS AND COMPANY
1007 Market Street
Wilmington Delaware 19898(US)

(72) Inventor: Flexman, Edmund Arthur, Jr.
10 Crestfield Road
Wilmington Delaware 19810(US)

(74) Representative: Jones, Alan John et al,
CARPMAELS & RANSFORD 43 Bloomsbury Square
London, WC1A 2RA(GB)

## (54) Thermoforming of polyoxymethylene/polyurethane compositions.

(57) Polyoxymethylene homopolymer/thermoplastic polyurethane compositions having 5-40 weight percent polyurethane have increased melt strength and a decrease rate of crystallization as compared with similar compositions without any polyurethane and are well suited for fabrication into shaped articles by thermoforming.

EP 0 120 711 A2

TITLE

THERMOFORMING OF
POLYOXYMETHYLENE/POLYURETHANE COMPOSITIONS

DESCRIPTION

Technical Field

This invention relates to a method of fabricating certain polyoxymethylene compositions which are characterized by high toughness and/or impact resistance. Polyoxymethylene compositions are generally understood to include compositions based on homopolymers of formaldehyde or of cyclic oligomers of formaldehyde, for example trioxane, the terminal groups of which are end-capped by esterification or etherification, as well as copolymers of formaldehyde or of cyclic oligomers of formaldehyde, with comonomers containing oxyalkylene groups with at least two adjacent carbon atoms in the main chain, the terminal groups of which copolymers can be hydroxyl terminated or can be end-capped by esterification or etherification. The proportion of the comonomers can be up to 20 weight percent. Compositions based on polyoxymethylene of relatively high molecular weight as measured by standard gel permeation chromatography techniques, i.e. 20,000 to 100,000 are useful in preparing semi-finished and finished articles by any of the techniques commonly used with thermoplastic materials, e.g. compression

7A

molding, injection molding, extrusion, blow molding, rotational molding, melt spinning, stamping and thermoforming. Finished products made from such compositions possess extremely desirable physical properties, including high stiffness, strength and solvent resistance. However, thermoforming of polyoxymethylene compositions has heretofore been practically limited to compositions based on branched polyoxymethylene copolymer, primarily because polyoxymethylene homopolymer and linear polyoxymethylene copolymer lack several critical properties, namely high melt strength and low rate of crystallization under conditions generally used in thermoforming. Polyoxymethylene compositions have been recently developed containing 5-40 weight percent of certain thermoplastic polyurethanes which compositions can be formed into articles having extraordinary toughness and/or impact resistance. It has unexpectedly been discovered that such polyoxymethylene/polyurethane compositions, where the polyoxymethylene is a homopolymer or a linear copolymer, are characterized by significantly increased melt strength and decreased rate of crystallization as compared with similar polyoxymethylene compositions containing no polyurethane. It has further been discovered that such polyoxymethylene/polyurethane compositions can be successfully thermoformed with conventional equipment and conditions, while similar compositions without polyurethane can be thermoformed only in very small, non-intricate shapes, and only under very limited conditions. Accordingly, this invention relates to the method of making thermoformed articles from such polyoxymethylene/polyurethane compositions and to the thermoformed articles made by that method.

Background Art

Copending EPO Patent Application No. 84300760.0 filed February 7, 1984

discloses polyoxymethylene compositions having extraordinary impact resistance i.e. a Gardner impact value (measured according to ASTM D-3029, Method G, Geometry D using a 3.6 kg (8 pound) weight and injection molded 7.62 x 12.7 x 0.16 cm (3 x 5 x 1/16 inch) plaques of greater than 9 J (80 in-lb), which compositions consist essentially of

(a) 5-15 weight percent of at least one thermoplastic polyurethane, which polyurethane has a glass transition temperature of lower than 0°C, and

(b) 85-95 weight percent of at least one polyoxymethylene polymer, which polyoxymethylene polymer has a molecular weight of from 20,000 to 100,000,

the above-stated percentages being based on the total amount of components (a) and (b) only, the thermoplastic polyurethane being dispersed throughout the polyoxymethylene polymer as discrete particles, and the composition having a Gardner impact value of greater than 9 J.

Copending EPO Patent Application No. 84300759.2 filed February 7, 1984

discloses polyoxymethylene compositions having extraordinary toughness i.e. a notched Izod value (measured according to ASTM D-256, Method A) of greater than 375 J/m (7.0 ft-lb/in),

which compositions consist essentially of

(a) greater than 15 weight percent and not more than 40 weight percent of at least one thermoplastic polyurethane, which polyurethane has a soft segment glass transition temperature of lower than -15°C, and

(b) at least 60 weight percent and less than 85 weight percent of at least one polyoxymethylene polymer, which polyoxymethylene polymer has a molecular weight of from 20,000 to 100,000,

the above-stated percentages being based on the total amount of components (a) and (b) only, the thermoplastic polyurethane being dispersed throughout the polyoxymethylene polymer as a separate phase having an average cross-sectional size in the minimum dimension of not greater than 0.9 microns, and the composition having an Izod value of greater than 375 J/m.

The polyoxymethylene compositions disclosed in these two copending applications include compositions which can be thermoformed by the present invention to give the thermoformed articles of the present invention characterized by high toughness and/or impact resistance.

Numerous patent references make general disclosures that polyoxymethylene compositions (including those based on both homopolymers and those based on copolymers, both linear and branched) can be fabricated by a variety of techniques, including thermoforming. For example U.S. Patent Number 3,485,910, granted December 23, 1969 to Kennedy, U.S.

Patent Numbers 3,743,614 and 3,969,292, granted July 3, 1973 and July 13, 1976, respectively to Wolters et al, U.S. Patent Number 3,795,715 granted March 5, 1974 to Cherdon et al, U.S. Patent Number 3,920,617, granted September 2, 1975 to Valyi, U.S. Patent Number 4,061,706, granted December 6, 1977 to Duffield et al, U.S. Patent Numbers 4,024,105; 4,046,738; 4,111,912; and 4,151,346, granted May 17, 1977, September 6, 1977, September 5, 1978, and April 24, 1979, respectively, to Sextro et al, U.S. Patent Number 4,085,177, granted April 18, 1978 to Sauer and U.S. Patent Numbers 3,642,940; 4,082,729 and 4,195,158, granted February 15, 1972, April 4, 1978, and March 25, 1980 respectively to Burg et al, all make such a general disclosure. However, none of these references contain any actual working examples of thermoforming of polyoxymethylene compositions.

In fact, it is generally known that polyoxymethylene homopolymer and linear copolymer are not particularly well suited for thermoforming, and that only polyoxymethylene terpolymers, i.e. polyoxymethylene branched copolymers, have sufficient melt strength to be practically suited for thermoforming. See, for example U.S. Patent Number 3,489,717, granted January 13, 1970 to Penchert et al, and British Patent Number 1,026,777 published April 20, 1966.

Disclosure of the Invention

This invention relates to a method of fabricating by thermoforming certain polyoxymethylene compositions into articles which are characterized by high toughness and/or impact resistance. The polyoxymethylene compositions that can be thermoformed by the method of the present invention are those based on homopolymers of formaldehyde or of

cyclic oligomers of formaldehyde, the terminal groups of which are end-capped by esterification or etherification, and linear copolymers of formaldehyde or of cyclic oligomers of formaldehyde with comonomers containing oxyalkylene groups with at least two adjacent carbon atoms in the main chain the terminal groups of which copolymers can be hydroxyl terminated or can be end-capped by esterification or etherification.

It has been found that toughened and/or impact resistant polyoxymethylene compositions consisting essentially of

(a) 5-40 weight percent of at least one thermoplastic polyurethane, which polyurethane has a soft segment glass transition temperature of lower than 0°C, and

(b) 60-95 weight percent of at least one polyoxymethylene polymer, which polyoxymethylene is a homopolymer or a linear copolymer which has a molecular weight of from 20,000 to 100,000,

the above-stated percentages being based on the total amount of components (a) and (b) only, exhibit significantly increased melt strength and decreased rate of crystallization as compared with similar polyoxymethylene compositions containing no polyurethane.

It has been further been found that the above-mentioned significant increase in melt strength and decrease in the rate of crystallization makes the polyoxymethylene/polyurethane compositions described above particularly well suited for fabricating articles by thermoforming, including articles of large size and/or intricate shape. This is

especially significant because similar compositions not containing any polyurethane cannot be practically thermoformed.

It should also be noted that polyoxymethylene compositions were developed more than twenty years ago as the first in what has become an entirely new class of materials known as "engineering plastics". While polyoxymethylene compositions offered enormous advantages with respect to certain physical properties as compared with prior plastic materials, extensive and numerous efforts have been directed at modifying certain other physical properties inherent in polyoxymethylene compositions by means of various additives to these compositions. These efforts have resulted in only very minor modification and improvement in these properties, primarily because it has been extremely difficult to find materials that are compatible with the polyoxymethylene, and even more difficult to find materials that are compatible with the polyoxymethylene and also exert a strong positive influence on the properties which are sought to be improved. The first significant breakthrough in more than twenty years of research with polyoxymethylene compositions is the subject matter of copending European Applications 84300759.2 and 84300760.0 discussed above. In addition to the high toughness and/or impact resistance found in articles made from such compositions, it has further been found that such compositions, particularly those based on polyoxymethylene homopolymer or linear copolymer, have characteristics in the molten state that render them particularly well suited for fabricating articles by thermoforming, even articles that are large and/or intricately shaped, whereas compositions

based on polyoxymethylene homopolymer or linear copolymer, but containing no polyurethane, are, for all practical purposes, not suitable for fabrication by thermoforming.

Accordingly, the method of the present invention comprises thermoforming of compositions that consist essentially of

(a) 5-40 weight percent of at least one thermoplastic polyurethane, which polyurethane has a soft segment glass transition temperature of lower than 0°C, and

(b) 60-95 weight percent of at least one polyoxymethylene polymer, which polyoxymethylene is a homopolymer or a linear copolymer which has a weight average molecular weight of from 20,000 to 100,000,

the above-stated percentages being based on the total amount of components (a) and (b) only. Various other ingredients, modifiers and/or additives can be included in the compositions used in the method of the present invention without significantly altering the essential features of the present invention as described herein.

Similarly, the articles of the present invention are those that have been made by thermoforming of compositions that consist essentially of

(a) 5-40 weight percent of at least one thermoplastic polyurethane, which polyurethane has a soft segment glass transition temperature of lower than 0°C, and

(b) 60-95 weight percent of at least one

polyoxymethylene polymer, which polyoxymethylene is a homopolymer or a linear copolymer which has a weight average molecular weight of from 20,000 to 100,000,

the above-stated percentages being based on the total amount of components (a) and (b) only.

It should be understood that the term "thermoforming" as used in the present application includes straight vacuum forming, drape forming, matched mold forming, pressure bubble-plug assist vacuum forming, plug assist forming, vacuum snapback, pressure bubble vacuum snapback, trapped sheet-contact heat-pressure forming, air-slip forming, and solid phase pressure forming, such as described in Modern Plastics Encyclopedia, volume 58, Number 10A, pages 405-412 (October 1981), and in Kirk-Othmer: Encyclopedia of Chemical Technology, volume 18, third edition, pages 199-200 (1982), which are incorporated herein by reference. A useful comparison between the compositions used in the method of the present invention and similar compositions not containing any polyurethane, is obtained by measuring melt tension as will be described more fully in the Examples. It will be seen that the compositions used in the method of the present invention have a significantly greater melt tension than similar compositions not having any polyurethane.

It has also been observed that one of the properties of polyoxymethylene homopolymer or a linear copolymer compositions is their extremely fast rate of crystallization, which is highly desirable for certain end uses, but is unacceptable for fabrication by thermoforming. It will be seen from

the Examples that the compositions used in the method of the present invention have a rate of crystallization significantly slower than the rate of crystallization of similar compositions not containing any polyurethane. This allows sufficient time for the polymer to be formed into the desired shape before crystallization along the outer surface occurs to a significant degree, thus permitting complete and proper shaping of the desired article.

Conditions normally used in thermoforming can be used in the method of the present invention. Generally, the temperature of the composition to be thermoformed must be above its softening point and below the temperature at which significant degradation occurs or at which the composition is so limp that it cannot be transported from the heating apparatus to the molding apparatus. For the compositions to be used in the method of the present invention, generally the temperature should be from about 160-195°C, preferably 165-185°C, most preferably about 170-180°C depending, of course, on the geometry and the size of the article to be formed. The temperature of the mold surface can be varied between about 30°C and about 150°C, preferably 130-140°C, for best results, depending on whether speed or surface quality is more important, i.e. generally a colder mold surface will permit a shorter cycle time and greater throughput, while a warmer mold surface will give a higher quality surface on the shaped article. Pressure to force the composition to the shape of the mold can be provided by vacuum or positive air pressure up to about 100 p.s.i., although other gases and conditions as known in the art can be chosen as suits the particular needs for the article being formed. In matched-mold

or compression thermoforming, higher pressures, e.g. 150-2000 p.s.i., are common.

Among the compositions useful in the method of the present invention, those containing higher proportions of polyurethane are generally preferred with respect to their suitability for thermoforming because of their greater melt strength. Similarly, those compositions containing polyoxymethylene having a higher molecular weight are generally preferred with respect to their suitability for thermoforming because of their higher melt viscosity. Compositions most preferred for their over all balance of properties, including their ease of fabrication by thermoforming, are those containing >15-40 weight percent polyurethane, preferably 20-35 weight percent polyurethane, and most preferably about 25-32 weight percent polyurethane. Similarly, compositions most preferred for their overall balance of properties, including their ease of fabrication by thermoforming, are those where the molecular weight of the polyoxymethylene is 25,000 to 90,000, preferably 30,000 to 70,000 and most preferably 60,000 to 70,000.

As an alternative to characterizing the polyoxymethylene by its molecular weight, it can be characterized by its melt flow rate. Preferred polyoxymethylenes will have a melt flow rate of 0.1-30 grams/10 minutes (measured according to ASTM D-1238, Procedure A, Condition G with a 1.0 mm (0.0413 inch) diameter orifice). Preferably, the melt flow rate of the polyoxymethylene will be from 0.5-10 grams/10 minutes, most preferably about 1 grams/10 minutes or less.

The most preferred polyoxymethylenes for use in compositions that can be thermoformed into articles having high impact resistance and/or

toughness are homopolymers with a molecular weight of about 63,000 and with terminal hydroxyl groups which have been end-capped by a chemical reaction to form ester or ether groups, preferably acetate or methoxy groups, respectively.

Thermoplastic polyurethanes preferred for use in compositions that can be thermoformed into articles having high impact resistance and/or toughness can be selected from those commercially available or can be made by processes known in the art. (See, for example, Rubber Technology, 2nd edition, edited by Maurice Morton (1973), Chapter 17, Urethane Elastomers, D. A. Meyer, especially pp. 453-6). Polyurethanes are derived from the reaction of polyester or polyether polyols with diisocyanates and optionally also from the further reaction of such components with chain-extending agents such as low molecular weight polyols, preferably diols. Polyurethane elastomers are generally composed of soft segments, for example polyether or polyester diols, and hard segments, derived from the reaction of the low molecular weight diols and diisocyanates. While a polyurethane elastomer with no hard segments can be used, those most useful will contain both soft and hard segments.

In the preparation of the thermoplastic polyurethanes preferred for use in compositions that can be thermoformed into articles having high impact resistance and/or toughness, a polymeric soft segment material containing at least two hydroxyl groups per molecule and having a molecular weight of at least about 500 and preferably from about 550 to about 5,000 and most preferably from about 1,000 to about 2,500, such as a dihydric polyester or a polyalkylene ether diol, is reacted with an organic diisocyanate

in a ratio such that a substantially linear Polyurethane polymer results. A diol chain extender having a molecular weight less than about 250 may also be incorporated. The mole ratio of isocyanate to hydroxyl in the polymer is preferably from about 0.95 to 1.08, more preferably 0.95 to 1.05, and most preferably, 0.95 to $\leq$1.00.

Suitable polyester polyols include the polyesterification products of one or more dihydric alcohols with one or more dicarboxylic acids. Suitable dicarboxylic acids include adipic acid, succinic acid, sebacic acid, suberic acid, methyladipic acid, glutaric acid, pimelic acid, azelaic acid, thiodipropionic acid and citraconic acid and mixtures thereof. Suitable dihydric alcohols include ethylene glycol, propylene glycol, 1,4-butanediol, 1,3-butanediol, 2-methyl pentane diol-1,5, diethylene glycol, pentanediol, hexanediol and mixtures thereof.

Further, hydroxycarboxylic acids, lactones, and cyclic carbonates, such as caprolactone and hydroxybutyric acid can be used in the preparation of the polyester.

Preferred polyesters include poly(ethylene adipate), poly(1,4-butylene adipate), mixtures of these adipates and polycaprolactone.

Suitable polyether polyols include the condensation products of one or more alkylene oxides with a small amount of one or more compounds having active hydrogen containing groups, such as water, ethylene glycol, 1,2- or 1,3- propylene glycol, 1,4-butanediol and 1,5-pentanediol, and mixtures thereof. Suitable alkylene oxide condensates include those of ethylene oxide, 1,2-propylene oxide and butylene oxide and mixtures thereof. Suitable

polyalkylene ether glycols may also be prepared from tetrahydrofuran. In addition, suitable polyether polyols can contain comonomers, especially as random or block comonomers, ether glycols derived from ethylene oxide and propylene oxide and/or tetrahydrofuran (THF). Alternatively, a THF polyether copolymer with minor amounts of 3-methyl THF can also be used.

Preferred polyethers include polytetramethylene ether glycol (PTMEG), polypropylene oxide, copolymers of propylene oxide and ethylene oxide, and copolymers of tetrahydrofuran and ethylene oxide.

Suitable organic diisocyanates include 1,4-butylene diisocyanate, 1,6-hexamethylene diisocyanate, cyclopentylene-1,3-diisocyanate, 4,4'-dicyclohexylmethane diisocyanate, isophorone diisocyanate, cyclohexylene-1,4-diisocyanate, 2,4-tolylene diisocyanate, 2,6-tolylene diisocyanate, isomeric mixtures of 2,4- and 2,6-tolylene diisocyanate, 4,4'-methylene bis(phenylisocyanate), 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, 4,4'-diphenyl diisocyanate, azobenzene-4, 4'-diisocyanate, m- or p-tetramethylxylene diisocyanate and 1-chlorobenzene-2,4-diisocyanate. 4,4'-methylene bis(phenylisocyanate), 1,6-hexamethylene diisocyanate, 4,4'-dicyclohexylmethane diisocyanate and 2,4-tolylene diisocyanate are preferred.

Secondary amide linkages including those derived from adipyl chloride and piperazine, and secondary urethane linkages, including those derived from the bis-chloroformates of PTMEG and/or

butanediol, can also be present in the polyurethanes.

Dihydric alcohols suitable for use as chain extending agents in the preparation of the thermoplastic polyurethanes include those containing carbon chains which are either uninterrupted or which are interrupted by oxygen or sulfur linkages, including 1,2-ethanediol, 1,2-propanediol, isopropyl-a-glyceryl ether, 1,3-propanediol, 1,3-butanediol, 2,2-dimethyl-1,3-propanediol, 2,2-diethyl-1,3-propanediol, 2-ethyl-2-butyl-1,3-propanediol, 2-methyl-2,4-pentanediol, 2,2,4-trimethyl-1,3-pentanediol, 2-ethyl-1,3-hexanediol, 1,4-butanediol, 2,5-hexanediol, 1,5-pentanediol, dihydroxycyclopentane, 1,6-hexanediol, 1,4-cyclohexanediol, 4,4'-cyclohexanedimethylol, thiodiglycol, diethylene glycol, dipropylene glycol, 2-methyl-1,3-propanediol, 2-methyl-2-ethyl-1, 3-propanediol, dihydroxyethyl ether of hydroquinone, hydrogenated bisphenol A, dihydroxyethyl terephthalate and dihydroxymethyl benzene and mixtures thereof. 1,4-butane diol, 1,2-ethane diol and 1,6-hexane diol are preferred.

In the preparation of the thermoplastic polyurethanes the ratio of isocyanate to hydroxyl end group should be close to unity, and the reaction can be a one step or a two step reaction. Catalyst can be used, and the reaction can be run neat or in a solvent.

Apart from what is described above concerning selection of the polyurethane, the most important characteristic of the thermoplastic polyurethane with respect to obtaining compositions that can be thermoformed into articles having high

impact resistance and/or toughness is its glass transition temperature (Tg). Wherever a glass transition temperature is reported herein, it is as determined using a Du Pont Model 981 Dynamic Mechanical Analysis Cell attached to a Model 990 Thermal Analyzer. The cell is modified to use liquid nitrogen as the coolant and to allow the use of a 3.2 cm (1.25 inch) gap holding the specimen. The oscillation amplitude is set at 0.2 mm. A heating rate of 2.5°C/min is used from -170°C to 0 to 40°C depending on the signal amplitude. Readings are taken every 1°C increment. The storage and loss moduli are plotted and the major loss modulus peak is defined as the soft segment glass transition temperature. Compositions that can be thermoformed into articles having high impact resistance and/or toughness can best be made when the soft segment glass transition temperature of the thermoplastic polyurethane is less than 0°C. Preferably, the soft segment glass transition temperature of the polyurethane should be less than -10°C, more preferably below -15 C, and most preferably below -30°C. Combinations or mixtures of thermoplastic polyurethanes can also be used.

For compositions that can be thermoformed into articles having high impact resistance and/or toughness the molecular weight of the soft segment of the thermoplastic polyurethane should average between about 500 and about 5000, preferably about 850-3000, more preferably about 1000-2500, with the most preferred polyurethanes having soft segments with an average molecular weight of about 2000.

Similarly, for compositions that can be thermoformed into articles having high impact resistance and/or toughness, the moisture content of

the composition, and of the polyurethane, should be less than 0.2 percent by weight of water, preferably less than 0.1 percent, especially when there is no opportunity for the water to escape, for example during molding.

For compositions that can be thermoformed into articles having high impact resistance and/or toughness the polyurethane must be intimately mixed and dispersed as a discrete phase in the polyoxymethylene, and it must be maintained in that state during the formation of the finished products.

For compositions that can be thermoformed into articles having high impact resistance and/or toughness, it is preferred that such compositions include 0.2-1.0 weight percent, preferably 0.3-1.0 and most preferably about 0.8 weight percent of ethylene bis-stearamide and 0.075-0.4 weight percent, preferably 0.075-0.25 and most preferably about 0.1 weight percent, of at least one polycarbodiimide having a molecular weight of about 1000 and containing units of the formula

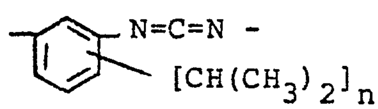

where n has an average value of about 3. In addition, it is preferred that such compositions contain a small quantity of hindered phenol antioxidant, e.g. 0.1 weight percent of 2,2'-methylene bis (6-t-butyl-4-methyl phenol) and a small quantity of a polyamide stabilizer, e.g. 0.4 weight percent of a terpolymer of approximately 38% polycaprolactam, 35% polyhexamethylene adipamide and 27% polyhexamethylene sebacamide.

Any intensive mixing device capable of developing high shear at temperatures above the melting points of the ingredients can be used to

disperse the polyurethane in the polyoxymethylene and to incorporate the ethylene bis-stearamide and the polycarbodiimide into the polyoxymethylene/polyurethane compositions. Examples of such devices include rubber mills, internal mixers such as "Banbury" and "Brabender" mixers, single or multiblade internal mixers with a cavity heated externally or by friction, "Ko-kneaders", multibarrel mixers such as "Farrel Continuous Mixers", injection molding machines, and extruders, both single screw and twin screw, both co-rotating and counter rotating. These devices can be used alone or in combination with static mixers, mixing torpedos and/or various devices to increase internal pressure and/or the intensity of mixing such as valves, gates or screws designed for this purpose. Continuous devices are preferred. Twin screw extruders are especially preferred, particularly those incorporating high intensity mixing sections such as reverse pitch elements and kneading elements. A mixing device that can be used to prepare compositions suited for use in the method of present invention is a 28 mm co-rotating Werner and Pfleiderer twin screw extruder, using a screw design containing two working sections with a total of five kneading elements, two reverse elements, and a vacuum port at about 70% of the distance from the feed throat to the die. All zones can be set at 190°C. Temperature of the melt coming out of the die can be about 220-260°C. Cooling water can be used to reduce temperatures in some cases. The extruder can be operated at 200-250 rpm with 6.8-13.6 kg (15-30 pounds) per hour throughput. A nitrogen blanket can be maintained over the feed throat to exclude oxygen and preserve dryness of the ingredients, and the

strand exiting the die can be quenched in water and cut into pellets. One can deviate from those conditions. For example melt temperatures below 190°C or higher than 260°C are possible if throughput is adjusted to compensate. However, 170-260°C is considered preferred, with 185-240°C preferred, and 200-230°C most preferred for melt compounding.

For compositions that can be thermoformed into articles having high impact resistance and/or toughness it is important to maintain the conditions created in the melt compounded material, such as distribution of the thermoplastic polyurethane as a dispersed phase in the polyoxymethylene, dryness of the composition, etc. Shaped articles made by the method of the present invention can be post treated by orientation, stretching, coating, annealing, painting, laminating and plating. Unused shaped articles, rejected shaped articles or waste composition of the present invention can be ground and remolded.

For compositions that can be thermoformed into articles having high impact resistance and/or toughness the polyoxymethylene polymer will comprise the continuous phase of such compositions and the thermoplastic polyurethane will be dispersed throughout the continuous phase polyoxymethylene. In the thermoformed articles made by the method of the present invention, the thermoplastic polyurethane can comprise discrete particles dispersed throughout the polyoxymethylene continuous phase, and this configuration is most commonly found when the proportion of polyurethane in the composition is relatively low. These particles of polyurethane can be approximately spherical in shape (i.e. the particles will have an aspect ratio approximately

equal to 1.0) or elongated (i.e. the particles will have an aspect ratio substantially greater than 1.0), and their size distribution can be Gaussian, bi- or polymodal, or other. If elongated, they can be only slightly elongated and approximately oval in shape, or they can be greatly elongated and resemble strands of thermoplastic polyurethane running through the polyoxymethylene continuous phase. In fact it is possible for such strands to run continuously the full length of such an article. Alternatively, such strands can be interconnected so as to form an interpenetrating network of thermoplastic polyurethane throughout the polyoxymethylene continuous phase, and this configuration is most commonly found when the proportion of polyurethane in the composition is relatively high.

It has been observed that when the polyurethane phase is elongated, the direction of elongation is generally the same for all the phase and is generally in the direction of the shear applied during the final stage of the preparation of the article while still in its molten state. It has been found most useful for the purpose of characterizing such compositions to measure average cross-sectional size of the polyurethane phase in a plane perpendicular to the direction of elongation and in the center of the formed article.

Average cross-sectional size is measured by the following technique. A "Sorvall" MT-2B ultra-microtome equipped with a diamond knife and a "Sorvall-Christensen" FTS-LTC-2 sectioner, operating at -90°C, is used to cut sections 200 nanometers thick from the center area of the molded article perpendicular to the direction of elongation of the polyurethane phase. Ethanol is used as a knife

lubricant and a number of slices are collected and then placed a petri dish containing distilled water. The mixing action of the ethanol and water spreads the microtomed slices apart and allows them to float on the top of the water. The microtomed slices are placed on a 200 mesh copper microscope grid. Electron photomicrographs of typical areas are photographed at 2500X using a Zeiss EM10A electron microscope at 80 KV equipped with a 70 mm roll film camera and Eastman 5302 film. Darkroom enlargements of the microscope negatives results in final 20.3 x 25.4 cm (8 x 10 in) photomicrographs at 11,800X.

Two 10.2 x 12.7 cm (4 x 5 in) pieces are cut from each 20.3 x 25.4 cm (8 x 10 in) photomicrograph with the 12.7 cm (5 in) edge of each piece parallel to the preferential direction, if any, in which most of the polyurethane was oriented. Each photomicrograph is scanned across the short dimension one row at a time by a flying spot scanner 200 microns square. This photomicrograph line of spots appears as a pattern of light and dark areas with varying levels of grey between them. The average density of this line is calculated. All images darker (more dense) than this average value are considered to be the thermoplastic polyurethane phase. Conversely all images lighter than this line are considered to be the polyoxymethylene matrix. The mean length of the up pulses (dark areas or thermoplastic polyurethane phase) is calculated. This measure is referred to hereinafter the average cross-sectional size in the minimum dimension.

Generally, articles having a smaller average cross-sectional size for the polyurethane phase are preferred because of their greater toughness and/or

impact resistance, although as a practical matter, the polyurethane phase should also have an average cross-sectional size of at least 0.01 microns. For compositions that can be thermoformed into articles having high impact resistance and/or toughness it is preferred to use a thermoplastic polyurethane with an inherent viscosity of 0.7 or above (as measured by ASTM D-2857 with a "Schott" automatic viscometer at 0.1% polyurethane in dimethyl formamide at 30°C). Thermoplastic polyurethanes having inherent viscosities of 0.75-2.5 are generally more preferred, with those having inherent viscosities of 1.0-1.7 being most preferred. Alternatively, it is possible to start with a polyurethane having a very low inherent viscosity, and then modify it during the blending operation, e.g. by further polymerization or cross-linking, thus increasing the effective viscosity of the polyurethane to a desirable level, even though the inherent viscosity of the starting material polyurethane was quite low. Alternatively, one could begin with a polyurethane having a higher inherent viscosity and degrade or hydrolyze it during compounding to obtain the desired effective viscosity.

In the following examples, there are shown specific embodiments of the present invention and certain side-by-side comparisons with embodiments of control experiments with similar compositions without any polyurethane. It will be seen that the compositions used in the method of the present invention are characterized by significantly lower crystallization rate and significantly higher melt tension. All parts and percentages are by weight, and all temperatures are in degrees Celsius unless otherwise specified. Measurements not originally in SI units have been so converted and rounded where

appropriate. All molecular weight measurements reported in these Examples and throughout this application are weight average molecular weights measured by gel permeation chromatography.

Example 1

Preliminary Evaluation of Thermoforming

A test composition was prepared containing 30 weight percent of a thermoplastic polyurethane having an inherent viscosity of 1.33, a glass transition temperature of -35°C, and a chemical composition of 37 weight percent adipic acid, 39 weight percent butane diol and 24 weight percent methylene bisphenyl isocyanate, 0.75 weight percent of a polyamide stabilizer (terpolymer of approximately 38% polycaprolactam/35% polyhexamethylene adipamide/27% polyhexamethylene sebacamide), 0.11 weight percent of 2,2'-methylene bis (6-t-butyl-4-methyl phenol) antioxidant, 0.2 weight percent of ethylene bis-stearamide lubricant, 0.1 weight percent of a mixture of polycarbodiimides having a molecular weight of about 1000 and containing units of the formula

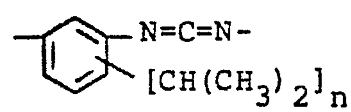

where n has an average value of about 3, and a complemental amount of acetate end-capped polyoxymethylene homopolymer having a weight average molecular weight of about 63,000. This composition was prepared in the form of sheeting about 1.5 mm in thickness and was thermoformed into a dish shaped mold having a top diameter of 7.6 cm, a bottom diameter of 6.5 cm and a depth of 1.2 cm using the following procedure:

1. Preheat the sheet for three minutes between the platens of a Watson-Stillman

press which platens are maintained at 175°C.

2. Remove the preheated sheet from the press and clamp it in the mold, which is maintained at 140-150°C.
3. Pull a vacuum between the sheet and the mold.
4. Apply air under pressure of 620 kPa (90 psi) to the space above the sheet.
5. After 60 seconds, release the pressure and the vacuum and remove the thermoformed sheet from the mold.

This composition appeared to thermoform easily and showed good surface characteristics on the thermoformed dish.

Example 2

Preliminary Comparison of Thermoforming

A composition the same as described in Example 1, above, was injection molded into plaques 0.16 x 7.6 x 7.6 cm (1/16 x 3 x3 in) using a 1 1/2 oz. Arburg reciprocating screw injection molding machine. A 90°C mold was used with temperature settings of 170°C-rear, 180°C-middle, 190°C-front, and 190°C-nozzle. A general purpose screw was used at 120 rpm with a 45 second-inject/15 second-cure cycle and 345 kPa (50 psi) back pressure. These plaques constitute Sample A.

A similar composition containing no polyurethane or polycarbodiimide was injection molded into plaques by the same technique. These plaques constitute Sample B.

Both samples were preheated to 180°C in a press between polytetrafluoroethylene coated aluminum foil for four minutes. They were then rapidly removed, placed on a fine mesh screen, and a heated

Buchner funnel was pressed on top of each plaque. As soon as the funnel was firmly pressed on the hot plaque, a vacuum of about 68 kPa (20 inches Hg) was drawn. The plaques of Sample A were readily pulled up and into the funnel where they hardened. Definition was such that some polymer was drawn into the holes at the bottom of the funnel. A coin placed on top of some of the preheated plaques of Sample A left an image (after the plaque was pulled under vacuum as above) and the reversed lettering could be read. The plaques of Sample B either crystallized too quickly and could not be drawn more than about one third of the way into the funnel, or ruptured and released the vacuum.

Example 3

Thermoforming Comparison with a Cylindrical Test Mold

Composition A in this experiment comprised 70 weight percent of acetate end-capped polyoxymethylene homopolymer having a weight average molecular weight of about 63,000 and 30 weight percent of a thermoplastic polyurethane having an inherent viscosity of 1.04, a glass transition temperature of -35°C, and a chemical composition of 37 weight percent adipic acid, 39 weight percent butane diol and 24 weight percent methylene bisphenyl isocyanate. The thermoplastic polyurethane contained 0.4 weight percent ethylene bis-stearamide premixed therewith. Composition B comprised 100 percent of the above-described polyoxymethylene.

Compositions A and B were blended with 1.0 weight percent of a polyamide stabilizer (dipolymer of approximately 15% polycaprolactam and 85% of polyhexamethylene dodecanoamide), 0.018 weight percent anti-oxidant [4,4'-butylidenebis(6-t-butyl-3-methyl phenol)] and 0.025 weight percent ethylene bis-stearamide and were extruded into 0.14 cm (0.055 in) thick sheet. The extrusion was carried out in a 3.5" Beloit extruder equipped with a 86.4 cm (34 in) Titian film die. The sheet was formed and calendered with a standard heated three roll calender stack. The following conditions were used in the extrusion:

barrel temp (°C) - 196/193/196/196/196 (rear to front)
adapter temp (°C) - 204
die temp (°C) - 204/199/199/210/151/199 (left to right)
die width - 86.4 cm (34 in)
die opening - 0.18 cm (0.07 in)
stock temp (°C) - 116/138/107 (top/center/bottom)
take off speed - 55.9 cm (22 in)/min

Samples 22.8 x 24.1 cm (9x9.5 in) were cut from the extruded sheets. Those based on composition A were designated Sample A, and similarly based on composition B were designated Sample B. Several samples of each were cut and tested for thermoforming as follows:

The thermoforming was carried out in a Brown vacuum forming machine using a cylindrical test mold. The test mold comprised a 12.7 cm (5 in) inside diameter, 14.0 cm (5.5 in) outside diameter brass pipe, 21.6 cm (8.5 in) deep, having an aluminum mold bottom which could adjusted at 1.3 cm (0.5 in) intervals to depths from 3.8 -15.0 cm (1.5-6.0 in). The mold bottom was divided into six equal pre-shaped sections. One section was polished smooth. The other five sections had machined grooves of various depths as a measure of quality of definition.

The mold was centered horizontally in reference to the machine clamping frame. The mold

was installed such that the top edge of the mold extended 0.3-0.6 cm (1/4 - 1/8 in) above the supporting part of the clamping frame.

The thermoforming machine was equipped for two sided sheet heating. The voltage controller on both heaters were set at approximately 60% to insure uniform heating of the sheet. The surface temperature of the sheet at forming was measured with a "Thermolabils" manufactured by the Paper Thermometer Company of Greenfield, New Hampshire. The vacuum during thermoforming was 91 kPa (27 inches mercury).

Samples were thermoformed with the mold set at various depths, starting with the most shallow and increasing the depth for subsequent samples.

It was observed that at a sample surface temperature of 177-182°C (350-360°F) Sample A could be successfully drawn to a depth of 7.6 cm (3 in). The reproduction of bottom detail was judged only fair. Detail was not significantly improved with smaller draws.

In contrast, Sample B could not be thermoformed even at 3.8 cm. The sample merely blew holes and released the vacuum.

Example 4

<u>Comparison of Physical Properties of the Melt</u>

Crystallization half time and melt tension for compositions used in Samples A and B described in Example 2, above, were measured as follows:

Crystallization half time is a measure of the rate of crystallization of the test composition. This property was determined as follows. Each test composition was heated rapidly (320°C/minute) to 40° above its melting peak temperature and held for three minutes. The test compositions were then rapidly

cooled (320°C/minute) and the rate of heat loss from the sample at 154°C was measured with a differential scanning calorimeter. The rate of heat loss for each sample will start off low and go through a maximum. The time required for a given sample to reach that maximum is defined as the crystallization half time. The crystallization half time at 154°C for Composition A was 1.9 minutes and for Composition B was 0.6 minutes.

Melt tension is a measure of the force required to break a molten filament of the test composition. This property was determined by a melt drawing technique. The test compositions were extruded at 190°C through a 0.0312 inch diameter by 0.126 inch length capillary. A piston velocity of 0.2 inch/minute was used. Cylinder diameter was 0.379 inch. The extruded stream was drawn over a pulley connected to a force transducer and then onto a variable speed take-off assembly. The tension at break was recorded for six replications for each of compositions A and B. The average value for Composition A was 1.9 grams, and for Composition B was 1.0 grams. The higher value for Composition A is indicative of a higher melt strength and explains, at least in part, the superior performance of Composition A in routine thermoforming operations, such as shown in Examples 1-3.

Claims

1. A method for preparing shaped articles comprising thermoforming a polyoxymethylene composition which consists essentially of

(a) 5-40 weight percent of at least one thermoplastic polyurethane, which polyurethane has a soft segment glass transition temperature of lower than 0°C, and

(b) 60-95 weight percent of at least one polyoxymethylene polymer, which polyoxymethylene is selected from the group consisting of a homopolymer and linear copolymer, which polymer has a weight average molecular weight of from 20,000 to 100,000.

the above-stated percentages being based on the total amount of components (a) and (b) only.

2. The method of Claim 1 wherein the polyoxymethylene composition is heated to a temperature of 160-195°C prior to being blow molded.

3. The method of Claim 2 wherein the temperature is 165-185°C.

4. The method of Claim 2 wherein the temperature is 170-180°C.

5. The method of any one of Claims 1 to 4 wherein the polyurethane has a soft segment glass transition temperature of lower than -10°C.

6. The method of any one of Claims 1 to 5 wherein the polyoxymethylene is a homopolymer and has a molecular weight of 30,000-70,000.

7. The method of any one of Claims 1 to 6 wherein the

5337A thermoplastic polyurethane comprises 15 to 40 weight percent of the composition.

8. The method of Claim 7 wherein the thermoplastic polyurethane comprises 20 to 35 weight percent of the composition.

9. The method of Claim 8 wherein the thermoplastic polyurethane comprises 25 to 32 weight percent of the composition.

10. The method of any one of Claims 1 to 9 wherein the thermoplastic polyurethane is derived from the reaction of butylene adipate, methylene bis(phenylisocyanate) and 1,4-butane diol.

11. The method of any one of Claims 1 to 10 wherein the mold temperature is 30 to 120°C.

12. The method of Claim 11 wherein the mold temperature is 50 to 90°C.

13. Shaped articles made by the method of any one of Claims 1 to 12.